# EUROPEAN PATENT SPECIFICATION

(11) **EP 0 700 632 B1**
(45) Date of publication and mention of the grant of the patent: **15.03.2000**
(21) Application number: 95304844.4
(22) Date of filing: 11.07.1995
(51) Int. Cl.: A01G 3/053

(54) **A cutting section for a cutting machine such as a mower or hedge trimmer**
Schneidvorrichtung für ein Schneidgerät wie einen Mäher oder einen Heckenschneider
Dispositif de coupe pour un outil de coupe tel qu'une tondeuse ou un taille-haie

(30) Priority: 08.09.1994 JP 21501294; 08.09.1994 JP 21501394
(43) Date of publication of application: 13.03.1996
(73) Proprietor: NIKKARI CO., LTD., Okayama-shi, Okayama-ken (JP)
(72) Inventor: Ueyama, Hisashi, c/o Nikkari Co., Ltd., Okayama-shi, Okayama-ken (JP)
(74) Representative: BATCHELLOR, KIRK & CO.

(56) References cited:
- EP-A- 0 160 420
- EP-A- 0 465 117
- FR-A- 2 402 127
- US-A- 5 075 972

## Description

The present invention relates to a cutting machine such as a mower or a hedge trimmer, particularly to a cutting section (assembly) for the machine.

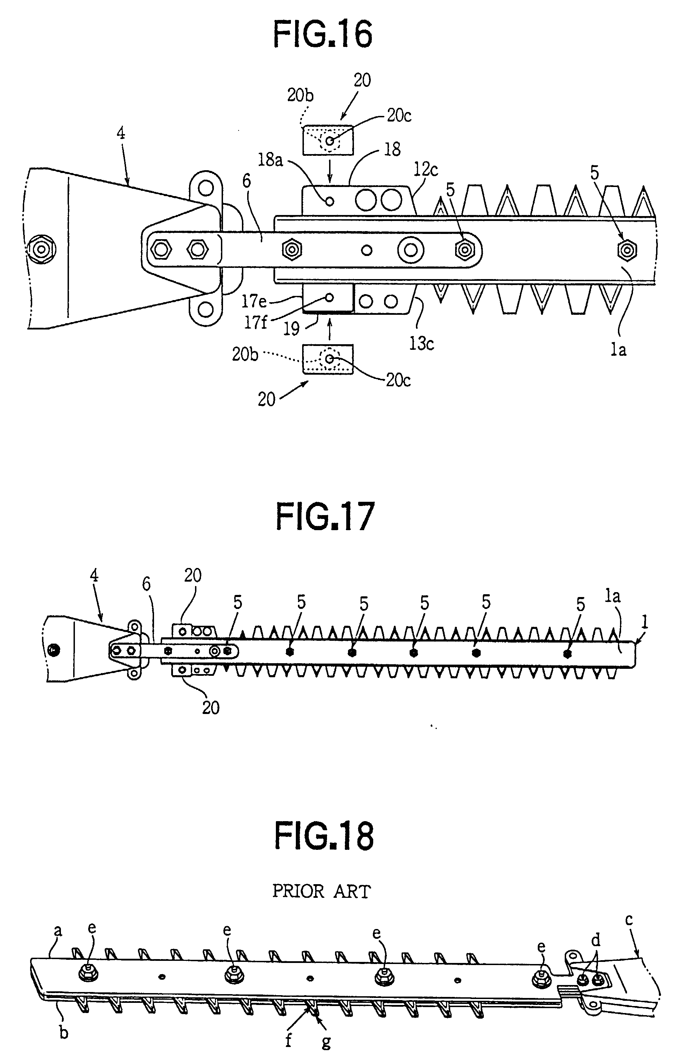

A conventional machine such as a mower or hedge trimmer is usually provided with a cutting section as illustrated in Fig. 18. It is seen from Fig. 18 that such a cutting section includes a pair of elongate guide plates a and b which are arranged at upper and lower positions respectively and each secured on a transmission case c of the machine, using a pair of bolt/nut means d. The two guide plates a and b are coupled with one another by several bolt/nut means e, arranged along the length of the guide plates. A bolt of each bolt/nut means is received within a spacer ring member (not shown) to ensure a predetermined space between the guide plates a and b. A pair of elongate cutter bars f and g lying one on top of another are slidably received in a space formed between the guide plates a and b. Each of the cutter bars f and g has a plurality of elongate guide holes (not shown) which receive the respective spacer ring members so that the cutter bars, when being reciprocated in the longitudinal direction, can be guided by these spacer ring members.

Further, the rear ends of both the cutter bars f and g are drivingly connected with a crank mechanism (not shown) disposed within the transmission case c. The crank mechanism in turn is rotated by an engine through a clutch device (not shown). The transmission system thus constructed is adapted to drive the cutter bars f and g in such a manner that each of them is reciprocated always in an opposite direction to the other, longitudinally of the guide plates, whereby a desired cutting tasks effected. With use of the machine, the cutting edges of the blades on both the cutter bars f and g may become blunt, and it will be difficult to go on with the grass cutting operation if the blunt cutter bars are not sharpened or replaced by new ones.

In order to replace a pair of cutter bars, it is at first necessary to remove the used cutter bars f and g from the position between the guide plates a and b. This is troublesome since it requires the entire cutting section and the transmission case c to be dismantled.

In order to detach the cutter bars f and g from the cutting section, first, all the bolt/nut means e have to be removed, then the two bolt/nut means d are removed from the transmission case c. The transmission case c is then dismantled. Cutter bar replacement, especially part way through a grass or hedge cutting task is inconvenient.

The same inconveniences are also experienced when a pair of cutter bars are replaced on the mower, in the reverse of the procedure described above. After the attachment of the replacement cutter bars f and g a precise adjustment is required to form an exactly correct space for the cutter bars between the two guide plates a and b. Such adjustment is usually performed by screwing up or down a nut at each bolt/nut means e and this often proves to be troublesome and the adjustment result is not always satisfactory, resulting in an incorrectly assembled cutting section.

An object of the present invention is to provide an improved cutting section for a cutting machine such as a mower or a hedge trimmer, so that a pair of cutter bars, can be easily and quickly changed for new ones without needing to dismantle the pair of guide plates and transmission case.

According to the present invention, there is provided a cutting section for a cutting machine comprising
a pair of elongate guide plates arranged at upper and lower positions respectively by virtue of several coupling means arranged in the longitudinal direction thereof, the pair of elongate guide plates being securable at their rear ends on a transmission case of the cutting machine;
a pair of elongate cutter bars arranged one on top of another and received in a space formed between the pair of elongate guide plates, each elongate cutter bar being formed with a plurality of elongate guide holes along the length thereof, and the rear end of each cutter bar being formed with a connecting portion characterised in that the connecting portions project laterally outwardly beyond the guide plates,
a pair of driving members are arranged at upper and lower positions respectively and are connected with the respective elongate cutter bars through the respective connecting portions, for reciprocating the elongate cutter bars when coupled to a crank mechanism in the transmission casing,
each such elongate guide hole communicating with a cutout formed in the cutter bar so that the two cutter bars are adapted to be installed in position between the pair of elongate guide plates and to be detached therefrom without disassembling the guide plates.

The cutouts provided in the cutter bars extend one each from the longitudinally extending guide hole laterally to the edge of each cutter bar. Thus, when it is necessary to separate the cutter bars from the cutting section, it is possible to disengage the longitudinally spaced coupling means from the longitudinally spaced slot like guide holes by displacing the cutter bar sideways, either by means of a pivoting action, or a motion parallel to the guide plates. Thus the several coupling means (which conventionally are each a bolt) do not need to be undone.

Each driving member may be connected with a corresponding cutter bar by securing the outer end of the driving member to the connecting portion of the corresponding cutter bar using at least one screw member.

The cutouts formed in communication with the elongate guide holes on each cutter bar may be divided into two groups, one group on a first longitudinal part of the cutter bar extends to on longitudinal edge and a second group in the other longitudinal part of the cutter bar extends towards the other longitudinal edge. For example, one group of cutouts located close to the rear end of each cutter bar are arranged to extend in a direction opposite to the projecting direction of the connecting portion of the cutter bar, and the other group of cutouts located close to the front end of the cutter bar are arranged to extend in the same direction as the projecting direction of the connecting portion. In this case the pair of elongate cutter bars are installed in position, or separated from between the pair of elongate guide plates by pivoting the pair of cutter bars like a pair of scissors.

In another embodiment of the present invention, the cutouts formed in communication with the elongate guide holes on each cutter bar are arranged to face in a direction opposite to the projecting direction of the connecting portion of the cutter bar. Therefore, the pair of elongate cutter bars are also adapted to be installed in position between the pair of elongate guide plates and to be detached therefrom, by laterally moving the two cutter bars left and right.

Non-limiting examples of a cutting machine having a cutting section for cutting a hedge, or grass, and embodying the present invention will now be described by way of example only with reference to the accompanying drawings, in which:
Fig. 1 is an exploded view from above of a cutting section according to a first embodiment of the present invention,
Fig. 2 is an exploded view from below of the cutting section according to the first embodiment of the present invention,
Fig. 3 is a side view of the first embodiment showing a pair of guide plates assembled by means of several couplings,
Fig. 4 is an enlarged side view of the first embodiment showing a part of the assembled guide plates in detail, illustrating how the two guide plates are coupled together,
Fig. 5 is an enlarged side view of the first embodiment showing a part of the cutting section, adjacent to the rear end,
Fig. 6 is a view from above of showing the beginning (first step) of the procedure for assembly of the pair of cutter bars into position between the pair of guide plates,
Fig. 7 shows a later stage in the assembly procedure illustrated in figure 6,
Fig. 8 is a view of the cutting section of figures 6 and 7 at completion of the assembly procedure,
Fig. 9 is an enlarged view from above illustrating in detail the rear end portion of the cutting section in figure 8,
Fig. 10 is an exploded view from above of a cutting section according to a second embodiment,
Fig. 11 is an exploded view from below of the cutting section of the second embodiment,
Fig. 12 is a side view showing a pair of guide plates of the second embodiment in assembled condition,
Fig. 13 is an enlarged side view showing a part of the cutting section of Fig. 10, adjacent to the rear end,
Fig. 14 is an enlarged perspective view showing a U shaped retaining member,
Fig. 15 is an exploded view from above showing the beginning (first step) of the procedure for assembling the pair of cutter bars of Fig. 10 into a position between the two guide plates,
Fig. 16 is an enlarged view from above, illustrating in detail the rear end portion of the cutting section of the second embodiment,
Fig. 17 is plan view, illustrating the attachment of the two cutter bars of the second embodiment to the cutting section.

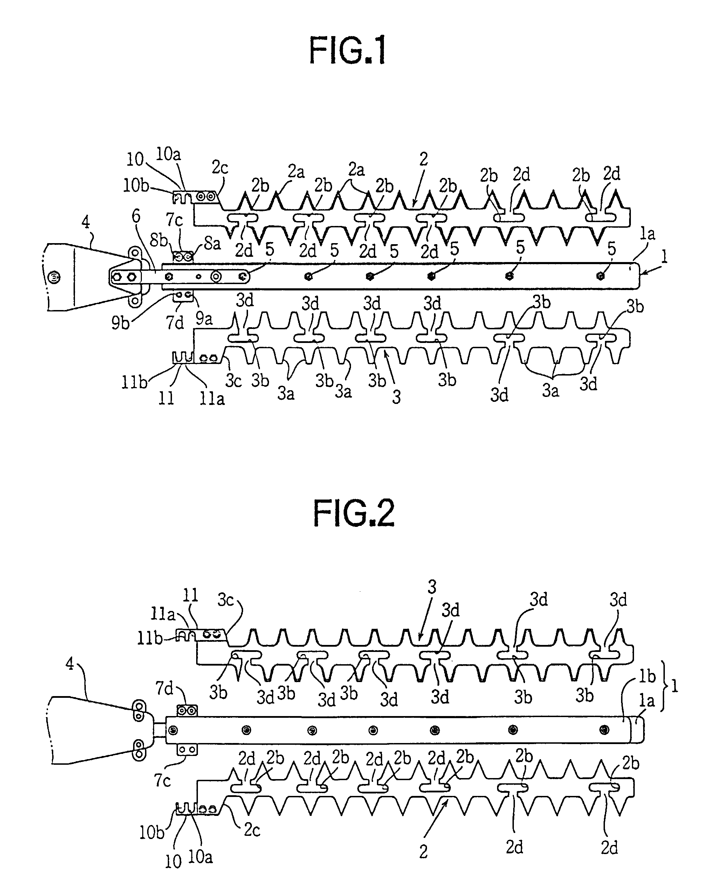

Referring to figure 1 a pair of guide plates 1 including an upper plate 1a and a lower plate 1b. An upper cutter bar 2 and a lower cutter bar 3, are arranged one on top of another so as to be installed in an elongate space between the two guide plates 1a and 1b to form a cutting section which is attached to a transmission case 4 to form a cutting machine such as mower or a hedge trimmer.

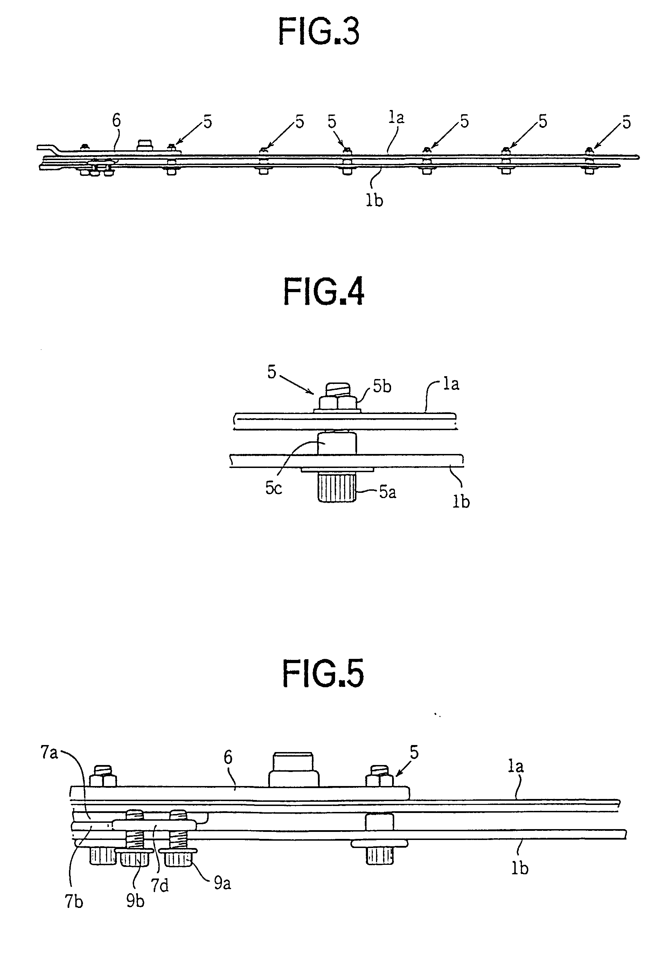

The guide plates 1a and 1b are elongate and coupled to one another with a predetermined space therebetween using a plurality of coupling means 5 as illustrated in Fig. 3. Fig. 4 shows an enlarged side view illustrating how the two guide plates 1a and 1b are coupled together. Each coupling means 5 includes a bolt 5a and nut 5b. The bolt 5a is so formed as to pass through both the plates 1a and 1b, and the nut 5b is screwed down on the bolt 5a on the upper surface of the upper guide plate 1a. Each bolt 5a is received in a ring-shaped spacer member 5c which is disposed between the plates 1a and 1b to provide the predetermined space. Alternatively, a bolt 5a is so formed that it can also be used at the same time as a spacer member (e.g. by the provision of a shoulder).

The pair of guide plates 1a and 1b, having been coupled in this way, are secured on to the transmission case 4 by securing the rear end of upper guide plate 1a to a support member 6 fixed with the transmission case 4.

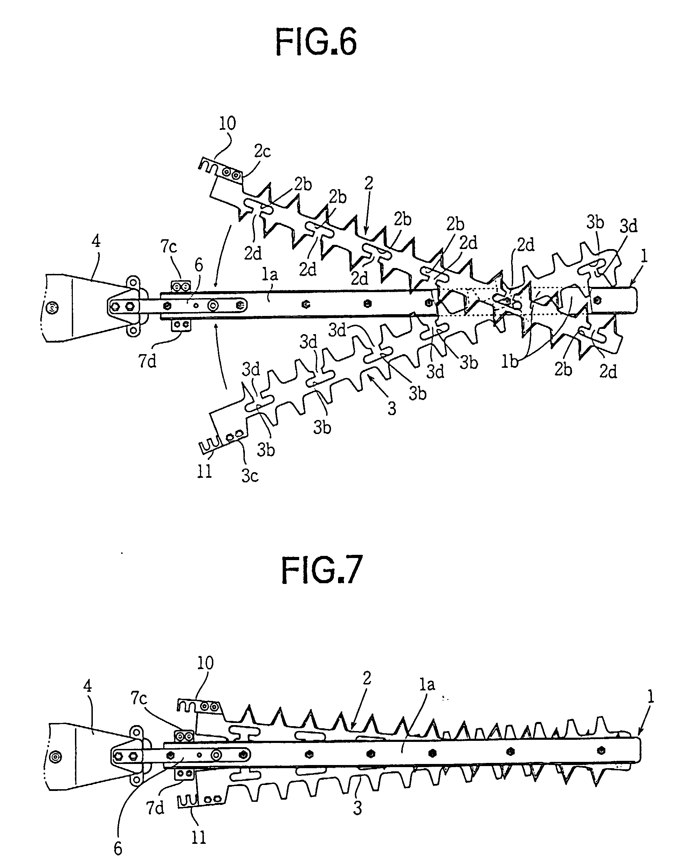

Here, the transmission case 4 contains a crank mechanism (not shown) which is driven by an engine through a clutch device (not shown). The crank mechanism is connected with the inner ends of a pair of driving members 7a and 7b (see Fig. 5) arranged one on top of another, in such a manner that the each of the members 7a and 7b reciprocates always in an opposite direction to the other in the longitudinal direction.

As shown in Fig. 5, the outer end portions of the driving members 7a and 7b are slidably held between the upper guide plate 1a and the lower guide plate 1b. As indicated in Fig. 1, the upper driving member 7a has a connecting portion 7c projecting to the left (when viewed from the rear end of the cutting section i.e. the end attached to the transmission case 4. Unless otherwise stated, all directions are as viewed from the rear end of the cutting section and from above). Similarly, the lower driving member 7b has a connecting portion 7d projecting to the right (when viewed from the rear end of the cutting section) *Thus the connecting portions project in opposite directions*. The connecting portion 7c is provided with two clamping bolts 8a and 8b, and the connecting portion 7d is provided with two clamping bolts 9a and 9b.

The upper cutter bar 2 and the lower cutter bar 3 are arranged one on top of another so as to be slidably installed between the two guide plates 1a and 1b. As shown in Figs. 1 and 2, the cutter bar 2 has on the opposite sides thereof a lot of triangular cutting blades 2a which are arranged with a predetermined pitch and are formed to project to the left and to the right beyond the guide plates 1a and 1b. Similarly, the cutter bar 3 has on the opposite sides thereof a lot of trapezoidal cutting blades 3a which are also arranged with a predetermined pitch and are formed to project to the left and to the right beyond the guide plates 1a and 1b. Each of the upper and lower cutter bars 2 and 3 has six elongate guide holes 2b and 3b respectively which are formed to receive (surroundingly engage) the spacer members 5c.

Integrally formed at the rear end of the upper cutter bar 2 is a connecting portion 2c which projects to the left, and secured on the upper surface of the connecting portion 2c is a connecting piece 10 which is adapted to be connected on the upper surface of the connecting portion 7c of the driving member 7a. The connecting piece 10 is formed with two U shaped cutouts 10a and 10b to engage with the clamping bolts 8a and 8b of the connecting portion 7c. Similarly, integrally formed at the rear end of the lower cutter bar 3 is a connecting portion 3c which projects to the right and secured on the underside of the connecting portion 3c is a connecting piece 11 which is adapted to be engaged with the underside of the connecting portion 7d. The connecting piece 11 is also formed with two U-shaped cutouts 11a and 11b to engage with the clamping bolts 9a and 9b.

Each of the six elongate guide holes 2b communicates with a corresponding one of six cutouts 2d which are formed to permit the passing of a respective one of the spacer members 5c engaged with the coupling means 5 into and out of the respective guide hole 2b. Similarly, each of the six elongate guide holes 3b are communicate with a corresponding one of six cutouts 3d which permit the passing of a respective one of the spacer members 5c engaged with the coupling means 5.

The six cutouts 2d are divided into two groups, one group being arranged in a direction extending laterally opposite to the other. The first two cutouts 2d close to the front end of the cutter bar 2 are arranged to extend in the same direction as the direction in which the connecting portion 2c portion projects. The remaining four cutouts 2d close to the rear end of the cutter bar are arranged to extend in the direction opposite to the direction in which the connecting portion 2c projects. Similarly, the six cutouts 3d on the lower cutter bar 3 are divided into two groups, one group extending in a direction opposite to the other. The first two cutouts 3d close to the front end of the cutter bar 3 are arranged to extend in the same direction as the direction in which the connecting portion 3c projects. The remaining four cutouts 3d close to the rear end of the cutter bar 3 extend in a direction opposite to the direction in which the connecting portion 3c projects.

Fig. 6 illustrates the procedure to attach the upper cutter bar 2 and the lower cutter bar 3 between the pair of guide plates 1a and 1b which are already assembled in position on the transmission case 4. As shown in Fig. 6, at first, the upper cutter bar 2 is disposed on the left side of the pair of assembled guide plates 1a and 1b, with the connecting portion 2c carrying the connecting piece 10 facing outward. The lower cutter bar 3 is arranged on the right side of the assembled guide plates 1a and 1b, with the connecting portion 3c carrying the connecting piece 11 facing outward. Then, the front end portion of the upper cutter bar 2 is inserted to the right into a position between the guide plates 1a and 1b and between the second and third coupling means 5 (counting from the front end of the guide plate 1a). Subsequently, the front end portion of the lower cutter bar 3 is inserted to the left into the same position.

In the second step of the procedure the second cutout 2d (counting from the front end of the cutter bar 2) is aligned with the spacer member 5c engaged with the second coupling means 5, so that the spacer member 5c passes through the cutout 2d and is engaged in the hole 2b. Similarly, the second cutout 3d is aligned with the same spacer member 5c, so that the spacer member 5c can pass through the cutout 3d and be engaged in the hole 3b.

Alternatively the second step of the procedure can consist of the third cutouts 2d and 3d of the upper and lower cutter bars 2 and 3, being aligned with the third spacer member 5c engaged with the third coupling means, so that the third spacer member 5c can pass through the third cutouts 2d and 3d and be engaged in the third guide holes 2b and 3b.

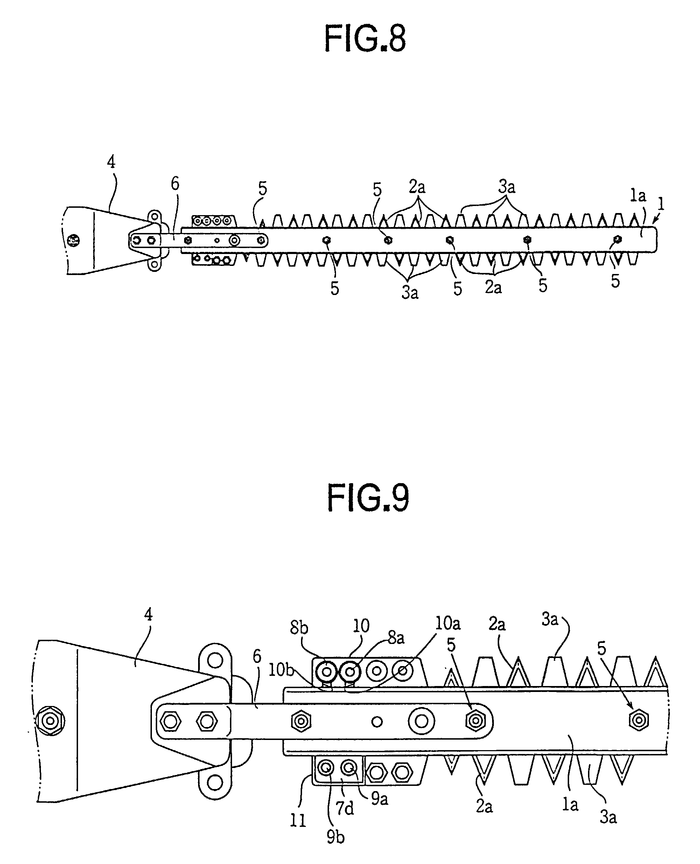

Subsequently, in the third step, the upper and lower cutter bars 2 and 3, with the above second (or third) spacer member 5c being engaged in their second (or third) elongate guide holes, are pivoted inwardly about the spacer member 5c like a pair of scissors, from a position shown in Fig. 6 to a position shown in Fig. 7. In this way, all the spacer members 5c are engaged with the respective coupling means 5 and pass through all the cutouts 2d and 3d so as to be received in the respective guide holes 2b and 3b of the cutter bars 2 and 3 so that the situation shown in Fig. 8 is reached.

In the situation illustrated in Fig. 8, the connecting piece 10 of the upper cutter bar 2 is engaged on the upper surface of the connecting portion 7c of the upper driving member 7a, with the clamping bolts 8a and 8b engaged in the cutouts 10a and 10b. Similarly, the connecting piece 11 of the lower cutter bar 3 is engaged with the underside face of the connecting portion 7d of the lower driving member 7b, with the clamping bolts 9a and 9b engaged in the cutouts 11a and 11b. By tightening the clamping bolts 8a, 8b, 9a and 9b, both the upper cutter bar 2 and lower cutter bar 3 can be firmly fixed in position on the cutting section and the entire assembling operation is completed.

Upon starting the engine (not shown) of the machine the crank mechanism (not shown) within the transmission case 4 is driven through the clutch device (not shown), so that each of the driving members 7a and 7b moves reciprocally and always in an opposite direction to the other causing the upper cutter bar 2 and the lower cutter bar 3 to move in the same manner with all the elongate guide holes 2b and 3b being guided by the respective spacer members 5c to produce the desired cutting action.

With use the cutting edges of the triangular and trapezoidal blades on the cutter bars 2 and 3 are blunted so and have to be replaced by new or newly sharpened (treated) ones. The blunt cutter bars may be removed by performing, in an reverse order, the above described attachment operation. Namely, upon loosening the clamping bolts 8a, 8b, 9a and 9b, the connecting pieces 10 and 11 may be removed from the connecting portions 7c and 7d, respectively, Then, holding connecting pieces 10 and 11, the upper and lower cutter bars 2 and 3 are pivoted outwardly about the second spacer member 5c. Afterwards, the two cutter bars 2 and 3 are so moved that the second spacer member 5c is passe out of the elongate guide holes 2b and 3b through the respective cutouts 2d and 3d. The entire detachment operation may thus be finished after moving out the front end portions of both the cutters 2 and 3.

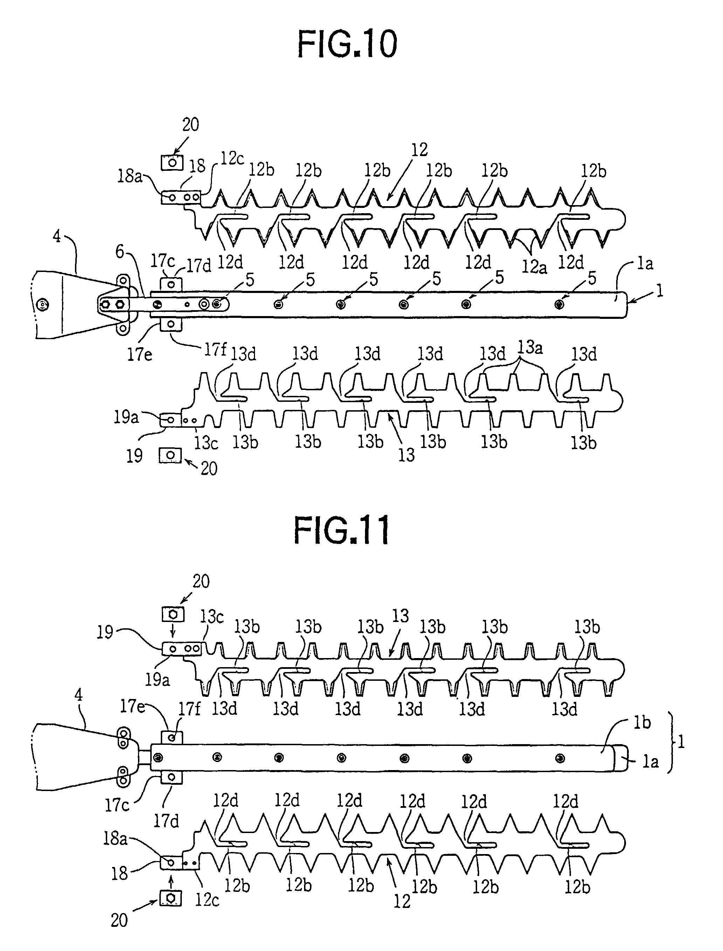

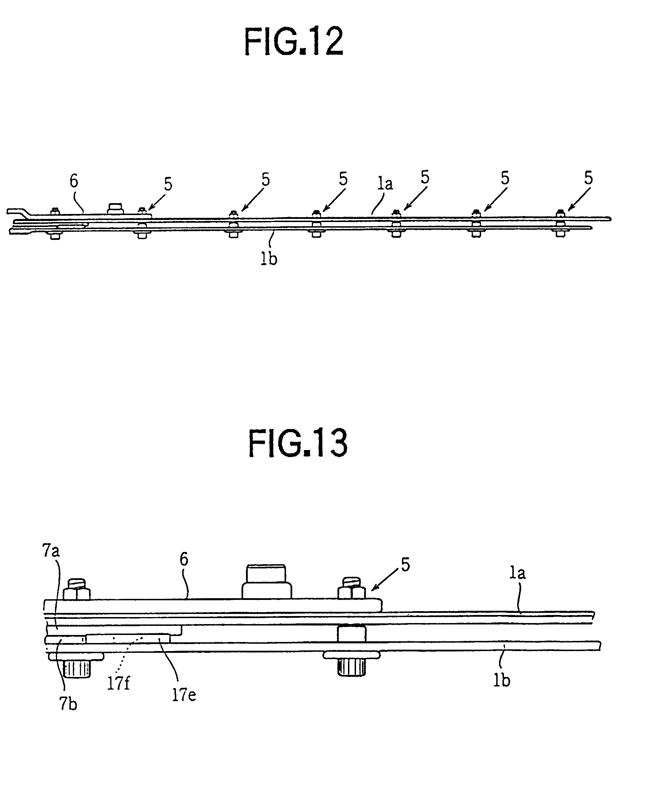

Figs. 10 - 17 illustrate another embodiment of the present invention.

As shown in Figs. 10-13, integrally formed at the rear end of an upper cutter bar 12 is a connecting portion 12c which projects to the left. Secured on the upper surface of the connecting portion 12c is a connecting piece 18 which is adapted to be connected on the upper surface of a connecting portion 17c of the driving member 7a. The connecting piece 18 is formed with a through hole 18a to be aligned with a through hole 17d of the connecting portion 17c of the upper driving member 7a. Similarly, integrally formed at the rear end of a lower cutter bar 13 is a connecting portion 13c which projects to the right. Secured on the underside of the connecting portion 13c is a connecting piece 19 which is adapted to be engaged with the underside of the connecting portion 17e of the driving member 7b. The connecting piece 19 is formed with a through hole 19a to be aligned with a through hole 17f of the connecting portion 17e of the lower driving member 7b.

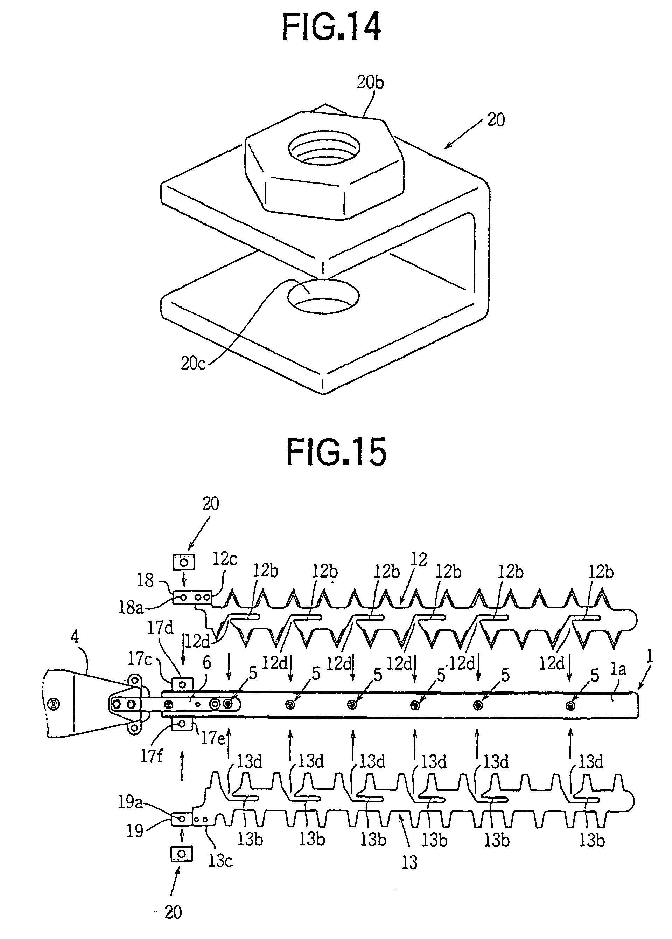

The connecting piece 18 secured on the upper cutter bar 12 is fixed on the upper surface of the connecting portion 17c of the upper driving member 7a, by means of a bracket 20 (see Fig. 14). Similarly, the connecting piece 19 secured on the lower cutter bar 13 is fixed on the underside face of the connecting portion 17e of the lower driving member 7b, also by means of a bracket 20 . The bracket 20 has a U-shaped cross section and has a pair of through holes 20c formed on the opposite side walls. Further, the bracket 20 has a nut 20b welded on the outer surface of one side wall.

The upper cutter bar 12 has six elongate guide holes 12b (which extend longitudinally) and communicate one each with each of six cutouts 12d respectively. Each of the cutouts 12d is formed at one end of the communicating elongate guide hole 12b to permit the passage of a spacer member 5c engaging with a coupling means 5 into and out of the guide hole 12b. Similarly, the lower cutter bar 13 has six elongate guide holes 13b communicating one each with one of six cutouts 13d. Each of the cutouts 13d is formed at one end of the communicating elongate guide hole 13b to permit the passage of the spacer member 5c engaged with a coupling means 5 into and out of the guide hole 13b. Here, all the cutouts 12d formed in communication with the guide holes 12b on the upper cutter bar 12 are arranged to face in a direction opposite to the projecting direction of the connecting portion 12c of the cutter bar 12. Similarly, all the cutouts 13d formed in communication with the guide holes 13b on the lower cutter bar 13 are arranged to face in a direction opposite to the projecting direction of the connecting portion 13c of the cutter bar 13.

Fig. 15 illustrates the operation of attaching the upper cutter bar 12 and the lower cutter bar 13 between the pair of guide plates 1a and 1b which have already been assembled and fixed in position on the transmission case 4. At first, the upper cutter bar 12 is disposed on the left side of the pair of guide plates 1a and 1b, with the connecting portion 12c (carrying the connecting piece 18) facing outwardly away from the guide plates. The upper cutter bar 13 is arranged on the right side of the pair of guide plates 1a and 1b, with the connecting portion 13c (carrying the connecting piece 19) facing outwardly. Then, in the directions represented by the numerous arrows the upper cutter bar 12 is inserted to the right into the space between the guide plates 1a and 1b and the lower cutter bar 13 is inserted to the left into the space between the guide plates 1a,1b.

During the insertion each of the cutouts 12d is aligned with a corresponding one of the spacer members 5c so that the spacer members 5c can pass through the cutouts 12d and be engaged in the holes 12b. Similarly, each of the cutouts 13d is aligned with a corresponding one of the spacer members 5c, so that the spacer members 5c pass through the cutouts 13d and engage in the holes 13b

Referring to Fig. 16, after the pair of cutter bars 12 and 13 have been inserted in position between the guide plates 1a and 1b, the underside of connecting piece 18 (see Fig. 15) of the upper cutter bar 12 will be engaged with the upper surface of the connecting portion 17c and the two members in contact with each other are embraced by the bracket 20. Then, a bolt (not shown) is passed through the pair of through holes 20c of the bracket 20, the through hole 18a of the connecting piece 18, the through hole 17d of the connecting portion 17c, and screwed up in the nut 20b so that the connecting piece 18 and connecting portion 17c can be firmly fixed in place. Similarly, the upper surface of connecting piece 19 of the lower cutter bar 13 will be engaged with the underside of the connecting portion 17e of the lower driving member 7b, and the two members in contact with each other are embraced by the bracket 20. Then, a bolt (not shown) is passed through the pair of through holes 20c of the bracket 20, the through hole 19a of the connecting piece 19, the through hole 17f of the connecting portion 17e, screwed into the nut 20b so that the connecting piece 19 and connecting portion 17e can be firmly fixed together in place. In this way, both the upper cutter bar 12 and the lower cutter bar 13 are exactly connected with the respective driving members 7a and 7b, and the assembling operation of the cutter bars 12 and 13 is complete.

When the cutter bars 12 and 13 become blunt after use it is necessary to replace them with new ones. The operation for removing the blunt cutter bars may be performed in an reverse order to the above attachment operation as follows. Upon loosening and removing the bolts (not shown) formerly screwed in the nuts 20b of the upper and lower brackets 20, and by holding at the connecting pieces 18 and 19, the two cutter bars 12 and 13 may be moved slightly in the longitudinal direction such that the respective cutouts 12d and 13d can be aligned with the respective spacer members 5 engaging with the respective coupling members 5, so that the upper and lower cutter bars 12 and 13 can be removed to the left and right respectively.

The embodiments of cutting sections described for a cutting machine obviate the need to dismantle the pair of guide plates when a pair of blunt cutter bars are to be replaced by new or sharpened ones. The operation for changing the cutter bars is therefore easy and quick even in the field where the cutting task is uncompleted. Therefore, the use of the cutting section for a cutting machine permits the cutting task such as grass mowing or hedge cutting to be performed with greatly improved efficiency as compared with prior art.

In both of the above described embodiments, the upper cutter bar is provided with a plurality of triangular cutting blades, the lower cutter bar is provided with a plurality of trapezoidal cutting blades. However, it is also possible that the upper cutter bar is provided with a plurality of trapezoidal cutting blades, whereas the lower cutter bar is provided with a plurality of triangular cutting blades. Alternatively, both the upper and lower cutter bars may be provided with only one type of cutting blade, i.e., either trapezoidal cutting blades or triangular cutting blades. There is no particular limitation to the shape and number of the cutting blades of both the upper and lower cutter bars.

In both of the described embodiments the cutouts of the upper cutter bar and the cutouts of the lower cutter bar, may be formed in communication with either central or end portions of the elongate holes, provided that a pitch distance between two adjacent elongate holes is compatible with (satisfies) a pitch distance between two adjacent spacer members engaged with corresponding coupling means.

## Claims

1. A cutting section for a cutting machine comprising :
a pair of elongate guide plates (1) arranged at upper and lower positions respectively by virtue of several coupling means (5) arranged in the longitudinal direction thereof, the pair of elongate guide plates (1) being securable at their rear ends on a transmission case (4) of the cutting machine;
a pair of elongate cutter bars (2,3 12,13) arranged one on top of another and received in a space formed between the pair of elongate guide plates (1), each elongate cutter bar (2,3; 12,13) being formed with a plurality of elongate guide holes (2b,3b;12b,13b) along the length thereof, and the rear end of each cutter bar (2,3; 12,13) being formed with a connecting portion (2c,3c;12c,13c) characterised in that the connecting portions (2c,3c;12c,13c) project laterally outwardly beyond the guide plates (1),
a pair of driving members (7a,7b) are arranged at upper and lower positions respectively and connected with the respective elongate cutter bars (2,3;12,13) through the respective connecting portions (2c,3c;12c,13c), for reciprocating the elongate cutter bars (2,3; 12,13) when coupled to a crank mechanism in the transmission casing,
each such elongate guide hole (2b,3b;12b,13b) communicating with a cutout (2d,3d;12d,13d) formed in the cutter bar (2,3; 12,13) so that the two cutter bars (2,3;12,13) are adapted to be installed in position between the pair of elongate guide plates (1) and to be detached therefrom without disassembling the guide plates (1).

2. A cutting section according to claim 1, wherein each driving member (7a,7b) is connected with a corresponding cutter bar (2,3;12,13) by securing the outer end of the driving member (7a,7b) to the connecting portion (2c,3c,12c,13c) of the corresponding cutter bar (2,3;12,13) using at least one screw member.

3. A cutting section according to claim 1 or claim 2, wherein the cutouts (2d,3d) are divided into two groups, with one group extending in a direction opposite to the other.

4. A cutting section according to claim 3, wherein one group of cutouts (2d,3d) located close to the rear end of each cutter bar (2,3) are arranged to face in a direction opposite to the projecting direction of the connecting portion (2c,3c) of the cutter bar (2,3), and the other group of cutouts (2d,3d) located close to the front end of the cutter bar (2,3) are arranged to extend in the same direction as the projecting direction of the connecting portion (2c,3c).

5. A cutting section according to claim 4, wherein the pair of elongate cutter bars (2,3) are adapted to be installed in position between the pair of elongate guide plates (1) and to be detached therefrom, by pivoting the pair of cutter bars (2,3) like a pair of scissors without disassembling any one of the guide plates.

6. A cutting section according to claim 1, wherein the cutouts (12d,13d) formed in communication with the elongate guide holes (12b,13b) on each cutter bar (12,13) are arranged to face in a direction opposite to the projecting direction of the connecting portion (12c,13c) of the cutter bar (12,13).

7. A cutting section according to claim 6, wherein the pair of elongate cutter bars (12,13) are adapted to be installed in position between the pair of elongate guide plates (1) and to be detached therefrom, by laterally moving the two cutter bars (12,13) left and right respectively without disassembling any one of the guide plates (1).

8. A cutting section according to claim 1, wherein each driving member (7a,7b) is connected with a corresponding cutter bar (12,13) by securing the outer end of the driving member (7a,7b) to the connecting portion (12c,13c) of the corresponding cutter bar (12,13) using a U-shaped retaining member (20).

9. A cutting section according to claim 8, wherein the U-shaped retaining member (20) is used in combination with a bolt and a nut (20b).

10. A cutting section according to claim 9, wherein the nut (20b) is welded on the outer surface of one side wall of the U-shaped retaining member (20).

## Patentansprüche

1. Schneidabschnitt für eine Schneidmaschine, enthaltend:
ein Paar langgestreckter Führungsplatten (1), die in einer oberen bzw. einer unteren Position mittels mehrerer Verbindungselement (5) angeordnet sind, welche in Längsrichtung der Platten vorgesehen sind, wobei die beiden langgestreckten Führungsplatten (1) an ihren hinteren Enden an einem Getriebegehäuse (4) der Schneidmaschine anbringbar sind,
ein Paar langgestreckter Schneidbalken (2, 3; 12, 13), die aufeinander angeordnet und in einem Raum aufgenommen sind, der zwischen dem Paar langgestreckter Führungsplatten (1) ausgebildet ist, wobei jeder langgestreckte Schneidbalken (2, 3; 12, 13) mit mehreren langgestreckten Führungslöchern (2b, 3b; 12b, 13b) entlang seiner Längserstreckung ausgebildet ist und wobei das hintere Ende jedes Schneidbalkens (2, 3; 12, 13) mit einem Verbindungsabschnitt (2c, 3c; 12c, 13c) ausgebildet ist,
**dadurch gekennzeichnet**,
daß die Verbindungsabschnitte (2c, 3c; 12c, 13c) seitlich nach außen über die Führungsplatten (1) hervorstehen,
daß ein Paar Antriebselemente (7a, 7b) an der oberen bzw. der unteren Position vorgesehen und mit dem jeweiligen langgestreckten Schneidbalken (2, 3; 12, 13) über die entsprechenden Verbindungsabschnitte (2c, 3c; 12c, 13c) für eine hin- und hergehende Bewegung der langgestreckten Schneidbalken (2, 3; 12, 13) verbunden sind, wenn sie mit einem Kurbelgetriebe in dem Getriebegehäuse verbunden werden, wobei jedes langgestreckte Führungsloch (2b, 3b; 12b, 13b) mit einer Ausnehmung (2d, 3d; 12d, 13d) in Verbindung steht, die in dem Schneidbalken (2, 3; 12, 13) ausgebildet ist, so daß die beiden Schneidbalken (2, 3; 12, 13) in der Lage sind, zwischen dem Paar langgestreckter Führungsplatten (1) angebracht und von dort abgenommen zu werden, ohne daß die Führungsplatten (1) demontiert werden müssen.

2. Schneidabschnitt nach Anspruch 1,
bei dem jedes Antriebselement (7a, 7b) mit einem entsprechenden Schneidbalken (2, 3; 12, 13) durch Befestigen des äußeren Endes des Antriebselements (7a, 7b) an dem Verbindungsabschnitt (2c, 3c; 12c, 13c) des entsprechenden Schneidbalkens (2, 3; 12, 13) unter Verwendung von zumindest einem Schraubenelement verbunden ist.

3. Schneidabschnitt nach Anspruch 1 oder 2,
bei dem die Ausnehmungen (2d, 3d) in zwei Gruppen aufgeteilt sind, wobei sich die eine Gruppe in eine Richtung erstreckt, die entgegengesetzt zu der Richtung der anderen Gruppe ist.

4. Schneidabschnitt nach Anspruch 3,
bei dem die Gruppe der Ausnehmungen (2d, 3d), die nahe dem hinteren Ende jedes Schneidbalkens (2, 3) vorgesehen sind, so angeordnet ist, daß sie in eine Richtung entgegengesetzt zu der Überstandsrichtung des Verbindungsabschnitts (2c, 3c) des Schneidbalkens (2, 3) weisen, und bei dem die andere Gruppe der Ausnehmungen (2d, 3d), die nahe dem vorderen Ende des Schneidbalkens (2, 3) vorgesehen sind, so angeordnet ist, daß sie sich in die gleiche Richtung wie die Überstandsrichtung des Verbindungsabschnittes (2c, 3c) erstrecken.

5. Schneidabschnitt nach Anspruch 4,
bei dem das Paar langgestreckter Schneidbalken (2, 3) in der Lage ist, zwischen dem Paar langgestreckter Führungsplatten (1) installiert und von dort durch Verschwenken der beiden Schneidbalken (2, 3) ähnlich einer Schere ohne Demontage einer der Führungsplatten abgenommen zu werden.

6. Schneidabschnitt nach Anspruch 1,
bei dem die Ausnehmungen (12d, 13d), die in Verbindung mit den langgestreckten Führungslöchern (12b, 13b) an jedem Schneidbalken (12, 13) ausgebildet sind, so angeordnet sind, daß sie in eine Richtung entgegengesetzt zu der Überstandsrichtung des Verbindungsabschnitts (12c, 13c) des Schneidbalkens (12, 13) weisen.

7. Schneidabschnitt nach Anspruch 6,
bei dem das Paar langgestreckter Schneidbalken (12, 13) zwischen dem Paar langgestreckter Führungsplatten (1) montierbar und von dort durch seitliches Bewegen der beiden Schneidbalken (12, 13) nach links bzw. rechts demontierbar ist, ohne daß eine der Führungsplatten (1) abgenommen werden muß.

8. Schneidabschnitt nach Anspruch 1,
bei dem das Antriebselement (7a, 7b) mit einem entsprechenden Schneidbalken (12, 13) durch Befestigen des äußeren Endes des Antriebselementes (7a, 7b) an dem Verbindungsabschnitt (12c, 13c) des entsprechenden Schneidbalkens (12, 13) unter Verwendung eines U-förmigen Halteelements (201 verbunden ist.

9. Schneidabschnitt nach Anspruch 8,
bei dem das U-förmige Halteelement (20) in Verbindung mit einem Bolzen und einer Mutter (20b) verwendet wird.

10. Schneidabschnitt nach Anspruch 9,
bei dem die Mutter (20b) an der Außenfläche einer Seitenwand des U-förmigen Halteelements (20) angeschweißt ist.

## Revendications

1. Section de coupe destinée à un outil de coupe comprenant :
une paire de plaques de guidage (1) allongées disposées dans les positions supérieure et inférieure respectivement à l'aide de plusieurs moyens de couplage (5) disposés dans leur direction longitudinale, la paire de plaques de guidage (1) allongées pouvant être fixée au niveau de ses extrémités arrière sur un boîtier de transmission de l'outil de coupe ;
une paire de barres de coupe (2, 3 ; 12, 13) allongées disposées l'une au-dessus de l'autre et reçues dans un espace formé entre la paire de plaques de guidage (1) allongées, chaque barre de coupe (2, 3 ; 12, 13) étant réalisée avec une pluralité de trous de guidage (2b, 3b ; 12b, 13b) sur sa longueur, et l'extrémité arrière de chaque barre de coupe (2, 3 ; 12, 13) étant réalisée avec une partie de raccordement (2c, 3c ; 12c, 13c), caractérisée en ce que les parties de raccordement (2c, 3c ; 12c, 13c) font saillie latéralement vers l'extérieur au-delà des plaques de guidage (1),
une paire d'éléments d'entraînement (7a, 7b) est disposée respectivement dans les positions supérieure et inférieure et raccordée aux barres de coupe (2, 3 ; 12, 13) allongées respectives à travers les parties de raccordement (2c, 3c ; 12c, 13c) pour produire un mouvement de va-et-vient des barres de coupe (2, 3 ; 12, 13) allongées lorsqu'elles sont couplées à un mécanisme à manivelle dans le boîtier de transmission,
chaque trou de guidage (2b, 3b ; 12b, 13b) allongé communiquant avec une découpe (2d, 3d ; 12d, 13d) ménagée dans la barre de coupe (2, 3 ; 12, 13) de telle sorte que les deux barres de coupe (2, 3 ; 12, 13) soient ajustées pour être mises en place entre la paire de plaques de guidage (1) allongées et en être désolidarisées sans démonter les plaques de guidage (1).

2. Section de coupe selon la revendication 1, dans laquelle chaque élément d'entraînement (7a, 7b) est raccordé à une barre de coupe (2, 3 ; 12, 13) correspondante en fixant l'extrémité extérieure de l'élément d'entraînement (7a, 7b) à la partie de raccordement (2c, 3c, 12c, 13c) de la barre de coupe correspondante (2, 3 ; 12, 13) en utilisant au moins un élément de vis.

3. Section de coupe selon la revendication 1 ou 2, dans laquelle les découpes (2d, 3d) sont divisées en deux groupes, un groupe s'étendant dans une direction opposée de celle de l'autre.

4. Section de coupe selon la revendication 3, dans laquelle un groupe de découpes (2d, 3d) situé à proximité de l'extrémité arrière de chaque barre de coupe (2, 3) est disposé pour être tourné dans une direction opposée à la direction dans laquelle fait saillie la partie de raccordement (2c, 3c) de la barre de coupe (2, 3), et l'autre groupe de découpes (2, 3) est disposé pour s'étendre dans la même direction que la direction dans laquelle fait saillie la partie de raccordement (2c, 3c).

5. Section de coupe selon la revendication 4, dans laquelle la paire de barres de coupe (2, 3) est ajustée pour être mise en place entre la paire de plaques de guidage (1) allongées et pour en être désolidarisée, en faisant pivoter la paire de barres de coupe (2, 3) comme une paire de ciseaux dans démonter l'une quelconque des plaques de guidage.

6. Section de coupe selon la revendication 1, dans laquelle les découpes (12d, 13d) réalisées en communication avec les trous de guidage (12, 13b) allongés sur chaque barre de coupe (12, 13) sont disposées pour être tournées dans une direction opposée à la direction dans laquelle fait saillie la partie de raccordement (12c, 13c) de la barre de coupe (12, 13).

7. Section de coupe selon la revendication 6, dans laquelle la paire de barres de coupe (12, 13) allongées est ajustée pour être mise en place entre la paire de plaques de guidage (1) allongées et en être désolidarisée, en déplaçant latéralement les deux barres de coupe (12, 13) gauche et droite respectivement sans démonter l'une quelconque des plaques de guidage (1).

8. Section de coupe selon la revendication 1, dans laquelle chaque élément d'entraînement (7a, 7b) est raccordé à une barre de coupe (12, 13) en fixant l'extrémité extérieure de l'élément d'entraînement (7a, 7b) à la partie de raccordement (12c, 13c) de la barre de coupe (12, 13) correspondante en utilisant un élément de retenue (20) en forme de U.

9. Section de coupe selon la revendication 8, dans laquelle l'élément de retenue (20) en forme de U est utilisé en combinaison avec un boulon et un écrou (20b).

10. Section de coupe selon la revendication 9, dans laquelle l'écrou (20b) est soudé sur la surface extérieure de la paroi latérale de l'élément de retenue (20) en forme de U.
